# EUROPÄISCHE PATENTSCHRIFT

(11) **EP 3 378 253 B1**
(45) Veröffentlichungstag und Bekanntmachung des Hinweises auf die Patenterteilung: **03.07.2019**
(21) Anmeldenummer: 16797585.3
(22) Anmeldetag: 17.11.2016
(51) Int. Cl.: H04W 40/22, B61B 12/06, H04L 12/40, H04L 12/26, B61B 12/00, B61L 15/00, H04B 3/50

(54) **VERFAHREN ZUM ÜBERTRAGEN VON DATEN**
METHOD FOR TRANSMITTING DATA
PROCÉDÉ DE TRANSMISSION DE DONNÉES

(30) Priorität: 19.11.2015 AT 7462015
(43) Veröffentlichungstag der Anmeldung: 26.09.2018
(73) Patentinhaber: Innova Patent GmbH, 6922 Wolfurt (AT)
(72) Erfinder: PFEIFER, Daniel, 6580 St. Anton am Arlberg (AT); PERRIN, Bernard, 2013 Colombier (CH); NETZER, Gerhard, 6922 Wolfurt (AT); DECOTIGNIE, Jean-Dominique, 1033 Cheseaux (CH); DALLEMAGNE, Philippe, 2036 Cormondrèche (CH)
(74) Vertreter: Beer & Partner Patentanwälte KG
(86) Internationale Anmeldenummer: PCT/EP2016/078072
(87) Internationale Veröffentlichungsnummer: WO 2017/085223

(56) Entgegenhaltungen:
- WO-A1-95/30216
- DE-C1- 10 122 218
- BROCKNERS F: "Verify my service chain!", INTERNET CITATION, 3. Juni 2015 (2015-06-03), Seiten 1-4, XP002761776, Gefunden im Internet: URL:http://blogs.cisco.com/getyourbuildon/ verify-my-service-chain [gefunden am 2016-09-13]

## Beschreibung

Die Erfindung betrifft Verfahren zum Übertragen von Daten von wenigstens einer Nebenstation zu wenigstens einer Hauptstation entlang einer segmentierten Strecke, wobei zwei aneinanderstoßende Segmente jeweils durch einen Knoten verbunden sind und wobei die Strecke wenigstens drei Segmente mit wenigstens zwei Knoten aufweist.

An einer Seilbahnanlage gibt es neben den Sicherheitsfunktionen in den Stationen auch Überwachungseinrichtungen auf der Strecke. Die Strecke ist jener Teil der Seilbahnanlage, der sich zwischen den Stationen befindet und umfasst Stützenbauwerke, Fahrzeuge, das Seil und alle damit verbundenen mechanischen und elektrischen Sicherheitseinrichtungen. Die Signal- und Datenübertragung von der Strecke in die Station(en) bzw. von Station zu Station stellt dabei eine eigene Herausforderung dar.

Gelöst wird diese Herausforderung im Stand der Technik mit zwei wesentlichen Techniken, die jeweils eigene Nachteile und Kosten mit sich bringen.

Zum einen werden Erdkabel von Stütze zu Stütze verlegt, welche die einzelnen Stützen untereinander und die Stationen miteinander verbinden. Der Vorteil an dieser Lösung ist, dass Erdkabel, wenn diese einmal verlegt sind, kaum mehr Wartung benötigen und sehr zuverlässig sind, da sie vor den meisten Umwelteinflüssen geschützt sind. Der Nachteil an Erdkabeln ist, dass dafür die Erde entlang der Seilbahntrasse geöffnet werden muss. Dies ist einerseits mit erheblichen Kosten verbunden und andererseits in vielen Fällen nicht möglich, da Berglandschaften häufig unter besonderem Landschafts- und Umweltschutz stehen und umfangreiche Arbeiten, wie sie bei Erdkabeln erforderlich sind, nicht genehmigt werden.

Zum anderen werden Luftkabel zusätzlich zu den Trag- und/oder Zugseilen zwischen den Stützen gespannt. Auch diese Möglichkeit ist mit großen Kosten verbunden, da so die Stützen sehr viel fester verankert werden müssen, da nicht nur das Gewicht der zusätzlichen Kabel selbst berücksichtigt werden muss, sondern auch die Möglichkeit, dass diese im Winter vereisen, einbezogen werden muss. Weiters sind derartige Luftkabel nicht gänzlich vor möglichen Umwelteinflüssen geschützt und haben daher einen bestimmten Wartungsaufwand und müssen im Vergleich zu Erdkabeln, die viele Jahrzehnte genutzt werden können, früher ausgetauscht werden.

Der Erfindung liegt daher die Aufgabe zu Grunde, die oben beschriebenen Nachteile zu überwinden.

Gelöst wird diese Aufgabe erfindungsgemäß durch ein Verfahren der eingangs genannten Art mit den Merkmalen des Anspruchs 1.

Die Erfindung ist durch den unabhängigen Anspruch auf ein Verfahren definiert. Die abhängigen Ansprüche definieren besondere Ausführungsformen der Erfindung. Dabei beinhaltet das Verfahren die folgenden Punkte:
- die Daten der Nebenstation werden in N Datenpakete aufgeteilt, wobei N der Anzahl der Knoten entspricht,
- die Datenpakete werden unterscheidbar markiert, wobei jede Markierung mit einem bestimmten Knoten der Strecke korrespondiert,
- jedes Datenpaket wird entlang der Strecke jeweils nur an den benachbarten Knoten oder die benachbarte Station weitergegeben,
- in jedem Knoten wird bei Erhalt eines Datenpakets überprüft, ob die Markierung des Pakets mit dem jeweiligen Knoten korrespondiert, und bejahendenfalls werden Daten des Knotens zum Datenpaket hinzugefügt,
- die Datenpakete mit den Daten von den Knoten werden in der Hauptstation gesammelt
- und die Datenübertragung gilt dann als erfolgreich abgeschlossen, wenn alle N Datenpakete mit Daten aller N Knoten vorliegen.

Durch dieses Verfahren ist es möglich, die Daten aller Knoten, insbesondere aller Stützen einer Seilbahnanlage zu erfassen, und die Daten der Nebenstation, insbesondere einer Umkehrstation einer Seilbahn, zur Hauptstation, insbesondere einer Antriebsstation einer Seilbahn, zu transportieren, ohne dass ein direkter Datentransfer zwischen der Hauptstation und der Nebenstation notwendig ist. Vielmehr genügt es, wenn eine Stütze zu den jeweils benachbarten Stützen oder der benachbarten Station eine Datenverbindung aufbauen kann. Daher kann das Verfahren in einer bevorzugten Weiterbildung mittels einer drahtlosen Datenverbindung, insbesondere Richtfunk, durchgeführt werden.

Ein allgemeines Beispiel für den Aufbau von Funknetzen zeigt DE 101 22 218 C1.

Richtfunk hat dabei den Vorteil, dass er bei angemessener Ausrichtung, nicht durch umgebende Signale gestört werden kann. Umgebende Signale können jegliche Signale sein, die von Funkeinrichtungen emittiert werden (Mobilfunkmasten, Radiosender, Militärfunk, Schiffsfunk, diverser Richtfunk etc.). Die Anforderung, dass bei Richtfunk die einzelnen Knoten "Sichtkontakt" haben müssen, wird bei Seilbahnen automatisch erfüllt, da hier die einzelnen Stützen jeweils durch ein Seil verbunden sind und somit die Verbindung in einer direkten Linie automatisch besteht.

Gemäß einer ganz besonders bevorzugten Ausführungsform der Erfindung wird beim Empfang des ersten Datenpakets in der Hauptstation ein Timer gestartet und nach Verstreichen einer definierten Zeitpanne überprüft, ob alle Datenpakete eingetroffen sind. So wird sichergestellt, dass alle Glieder in der Datenkette in vollem Umfang funktionieren. Dies schließt sowohl die Datenweitergabe in der vorgegeben Zeit ein als auch die Funktionsfähigkeit aller Knoten hinsichtlich ihrer Datenweitergabe.

Wird diese Überprüfung negativ abgeschlossen, das heißt es sind nach Ablauf des Timers nicht alle erwarteten Datenpakete eingetroffen, wird entsprechend in einer bevorzugten Weiterbildung der Erfindung eine Eskalation, beispielsweise ein Alarm, ausgelöst.

Dies schließt selbstverständlich nicht aus, dass aufgrund der übertragenen Daten selbst, auch wenn diese vollständig und in der vorgegebenen Zeit eingetroffen sind, ebenfalls ein Alarm ausgelöst werden kann. Im Anwendungsbeispiel der Seilbahn kann es beispielsweise durchaus möglich sein, dass alle Daten erfolgreich übertragen wurden, die Daten einer Stütze beispielsweise aber angeben, dass eine falsche Lage des Seils vorliegt. Auch in diesem Fall ist es daher sinnvoll und gegebenenfalls notwendig auch bei erfolgreicher Datenübertragung eine Meldung herauszugeben.

In einer bevorzugten Ausführungsform der Erfindung benötigt jeder Knoten zum Verarbeiten der an ihn gegebenen Daten jeweils eine Zeitspanne von x ms und der Timer entspricht im Wesentlichen der Anzahl der Knoten N mal der Zeitspanne. So ist der Timer gerade lang genug, um den Empfang aller Daten zu ermöglichen aber kurz genug um direkt neue Daten zu empfangen. Selbstverständlich kann der Timer auch länger gewählt werden, was allerdings dazu führt, dass, wenn alle N Datenpakete von der Nebenstation herausgegeben wurden, unter Umständen eine Verzögerung eingebaut werden muss. Da es aber wünschenswert ist möglichst häufig über den Gesamtzustand der Anlage informiert zu werden, sind solche Verzögerungen nur bedingt hilfreich.

Im Gegensatz dazu ist es vorteilhaft und bevorzugt, wenn die einzelnen N Datenpakete verzögert an den ersten Knoten übergeben werden, so dass dieser jedes Datenpaket abarbeiten kann, bevor der Knoten das nächste Datenpaket erhält. Um gleichzeitig so viele Daten pro Zeit, wie möglich, zu transportieren entspricht ein Zeitwert y ms, um den versetzt die Datenpakete herausgegeben werden im Wesentlichen der Zeitspanne x ms, die für jeden einzelnen Knoten vorgesehen ist um ein Datenpaket zu empfangen, zu verarbeiten und weiterzugeben.

Weitere bevorzugte Ausführungsformen der Erfindung sind Gegenstand der übrigen Unteransprüche.

Nachstehend ist ein bevorzugtes Ausführungsbeispiel der Erfindung anhand der Zeichnungen näher beschrieben. Es zeigt:
- Fig 1.: ein Flussdiagramm mit einem beispielhaften Ablauf eines erfindungsgemäßen Verfahrens,
- Fig 2.: einen Sub-Prozess von Fig. 1, der die Herausgabe von Datenpaketen näher beschreibt und
- Fig 3.: eine schematisiert dargestellte, beispielhafte Anlage zum Durchführen des erfindungsgemäßen Verfahrens.

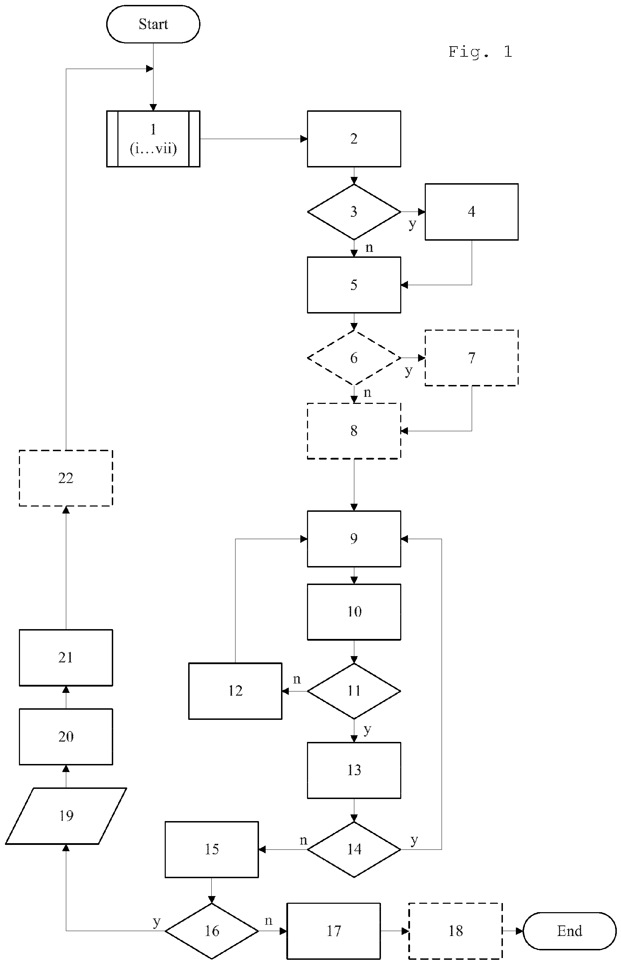

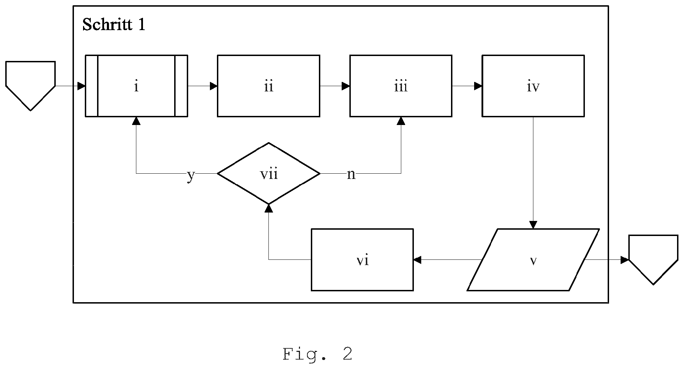

Im Flussdiagramm von Fig. 1 werden zunächst in Schritt 1 Daten der Nebenstation in N unterscheidbare, beispielsweise nummerierte, Pakete unterteilt. Dabei korrespondieren die Markierungen mit einzelnen Knoten. Im dargestellten Durchführungsbeispiel sind die Knoten und Pakete einfach durchnummeriert. Andere Markierungen können durch den Fachmann jedoch einfach gewählt werden. Dann werden die Pakete zeitversetzt, einzeln ausgegeben. Näheres zum in Schritt 1 ablaufenden Sub-Prozess wird bei Fig. 2 erläutert.

Ein c-tes Paket aus Schritt 1 wird in Schritt 2 vom ersten Knoten empfangen. Dann folgt in Schritt 3 die Abfrage, ob es sich bei der Nummer des Paketes c um die Nummer 1 handelt. Bejahendenfalls werden in einem Schritt 4 die Daten des ersten Knoten dem Datenpaket hinzugefügt. Dann folgt Schritt 5 in welchem die Daten an den benachbarten Knoten übergeben werden. Wird die Abfrage in Schritt 3 negativ beantwortet folgt der Schritt 5 direkt und das Datenpaket wird unverändert weitergegeben.

Dann empfängt ein m-ter Knoten das Datenpaket und überprüft in einem Schritt 6 die Nummer des c-ten Datenpakets. Entspricht die Nummer des Datenpakets c der Nummer des Knotens m werden in einem Schritt 7 die Daten des m-ten Knotens dem Datenpaket hinzugefügt. Dann wird das Datenpaket in einem Schritt 8 an den nächsten Knoten oder die nächste Station weitergereicht. Wird die Abfrage von Schritt 6 negativ beantwortet, wird das Datenpaket unverändert weitergereicht.

Die Schritte 6, 7 und 8 werden dabei sooft wiederholt bist alle Knoten durchlaufen sind und das Datenpaket an die Hauptstation weitergereicht wird. Im Falle einer Seilbahn könnten also beispielsweise insgesamt vierzig Knoten durchlaufen werden, wenn die Seilbahn vierzig Stützen hat.

Sind alle Knoten durchlaufen wird das Datenpaket in einem Schritt 9 in der Hauptstation empfangen. Ist das Paket empfangen wird in einem Schritt 10 ein Eingangszähler r um eins erhöht. Dann folgt in einem Schritt 11 die Abfrage ob ein Timer läuft. Wenn der nicht läuft wird er in einem Schritt 12 gestartet und es wird auf das Eintreffen weiterer Datenpakete gewartet (zurück zu Schritt 9). Wenn der Timer bereits läuft folgt ein Schritt 13 in welchem der Wert t des Timers ausgelesen wird. Liegt der Wert t des Timers unter einem festgesetzten Endwert T wird ebenfalls auf den Empfang weiterer Datenpakete gewartet (zurück zu Schritt 9). Ist der Endwert T des Timers bereits erreicht oder überschritten folgt Schritt 15.

In Schritt 15 wird der Wert r des Eingangszählers ausgelesen, dabei entspricht der Eingangszähler r der Anzahl der empfangenen Datenpakete. In Schritt 16 wird dann überprüft, ob die Anzahl der empfangen Datenpakete der Anzahl der Stützen entspricht, also ob alle Datenpakete eingetroffen sind.

Wurden nicht alle Datenpakete empfangen wird in Schritt 17 eine Meldung über einen negativen Datenzyklus ausgegeben. Optional können in einem Schritt 18 weitere Eskalationsmaßnahmen gesetzt werden, wie beispielsweise ein Not-Halt der Anlage.

Wurden alle Pakete empfangen werden diese in einem Schritt 19 ausgelesen, zusammengefügt und an eine Recheneinheit weitergegeben. In Schritt 20 wird dann der Timer angehalten und auf Null zurückgesetzt. In Schritt 21 wird der Eingangszähler r zurückgesetzt. Optional kann in einem Schritt 22 auch eine Meldung über den positiven Verlauf der Datenübertragung gegeben werden.

Die Abfolge der Schritte 19 bis 22 ist dabei für das erfindungsgemäße Verfahren unerheblich. So können Timer und Eingangszähler beispielsweise simultan zurückgesetzt werden und beides kann vor dem Zusammenfügen der Daten erfolgen.

Analog ist es für das erfindungsgemäße Verfahren unerheblich, ob beim Eintreffen des ersten Datenpakets in der Hauptstation zuerst der Timer gestartet wird oder zuerst der Zähler erhöht wird. Insbesondere da davon ausgegangen wird, dass diese Schritte in der Hauptstation im Vergleich zur Übertragung nur eine vernachlässigbare Zeit benötigen, um durchgeführt zu werden.

Fig. 2 skizziert grob den Sub-Prozess von Schritt 1 in Fig. 1. Dabei werden die Daten zunächst in einem Schritt i in N unterscheidbare Datenpakete zerlegt. In einem darauf folgenden Schritt ii wird ein Ausgangszähler c initialisiert, der beim initialisieren den Wert c = 0 hat. In Schritt iii wird der Zähler dann um eins erhöht um dann in Schritt iv ausgelesen zu werden. In Schritt v wird dann das c-te Paket an Schritt 2 von Fig. 1 ausgegeben.

Handelt es sich bei den Markierungen, wie in diesem Durchführungsbeispiel um eine einfache Nummerierung der Datenpakete, können die Daten in Schritt i auch einfach nur zerlegt werden und ihre Markierung auch erst in Schritt v erhalten. Dabei kann dann einfach der in Schritt iv ausgelesene Ausgangszählerstand als Markierung verwendet werden.

Der Schritt vi symbolisiert eine Zeitverzögerung von vorzugsweise T/N. Dadurch wird verhindert, dass der erste Knoten mehr Daten erhält als er abarbeiten kann. Dabei entspricht T der Gesamtdauer der Übertragung und N der Anzahl der Knoten.

Dann folgt in Schritt vii die Abfrage ob der Ausgangszähler c bereits den Wert N erreicht hat. Wenn dies nicht der Fall ist, wird der Zähler wieder in Schritt iii um eins erhöht und es folgt die Ausgabe eines weiteren Datenpaktes. Führt die Abfrage aus Schritt vi zu einem positiven Ergebnis beginnt der Sub-Prozess von vorn und es werden neue Daten in Schritt i in N Datenpakete zerlegt.

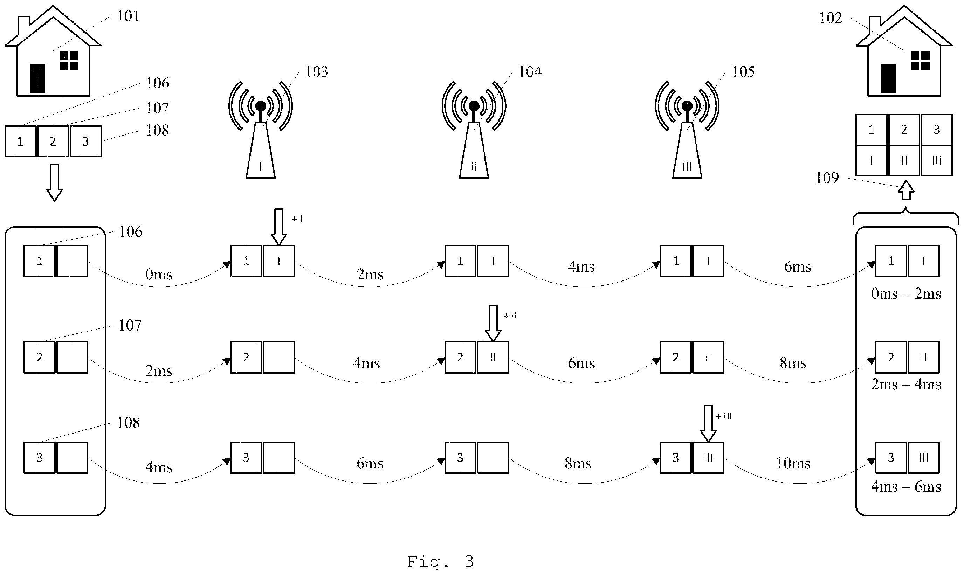

Die in Fig. 3 gezeigte beispielhafte und stark schematisierte Anlage zum Durchführen des erfindungsgemäßen Verfahrens weist eine Nebenstation 101, eine Hauptstation 102 sowie drei Knoten 103, 104, 105 auf.

Da die Anlage drei Knoten 103, 104, 105 aufweist, entspricht N in diesem konkreten Beispiel drei (N = 3). Folglich werden die Daten der Nebenstation in drei Datenpakete 106, 107, 108 unterteilt. In der dargestellten Anlage benötigt jeder Knoten 103, 104, 105 für das Handhaben der Daten 2ms (T/N = 2ms → T = 6ms) .

Dementsprechend wird das erste Datenpaket 106 bei 0ms an den ersten Knoten 103 übergeben, das zweite Datenpaket 107 bei 2ms und das dritte Datenpaket 108 bei 4ms. Der erste Knoten 104 übernimmt das Datenpaket 108 stellt fest, dass die Nummer des Datenpakets mit der Nummer des Knotens übereinstimmt und fügt dem Datenpaket Daten I hinzu. Nach 2ms wird das Datenpaket an den zweiten Knoten 104 weiter gegeben und dieser reicht das Datenpaket unverändert an den dritten Knoten 105 weiter.

Nach 2ms wird das zweite Datenpaket 107 an den ersten Knoten 103 gegeben und von diesem nach weiteren 2ms an den zweiten Knoten 104 weitergegeben. Der zweite Knoten 104 stellt fest, dass die Nummer des Datenpakets mit der Nummer des Knotens übereinstimmt und fügt dem Datenpaket Daten II hinzu (usw.).

Unter Umständen kann es dabei vorteilhaft sein, wenn vor dem ggf. komplexen Bestimmen der Markierung des Datenpakets durch den Knoten einfach nur abgefragt wird, ob dem Datenpaket bereits Daten eines Knotens hinzugefügt wurden. Dies kann beispielsweise durch bestimmen der Größe des Datenpakets erfolgen.

In der Hauptstation 102 werden die Datenpakete 106, 107, 108 empfangen und gesammelt. Dabei wird für jedes Datenpaket eine Verarbeitungszeit von ebenfalls 2ms vorgesehen. Nach 6ms sind alle Datenpakete eingetroffen und können zusammengefügt werden (dargestellt durch den Pfeil 109).

Inhalt der Flussdiagramme:
- 1: Daten der Nebenstation in N unterscheidbare (bspw. nummerierte) Pakete unterteilen (N = Anzahl Stützen) und ausgeben
- 2: c-tes Paket aus Schritt 1 wird vom 1ten Knoten empfangen
- 3: Abfrage der Nummer des Paketes durch ersten Knoten, c = 1?
- wenn ja: -> 4
- wenn nein: -> 5
- 4: Hinzufügen von Daten aus dem 1ten Knoten zum Paket (dann 5)
- 5: Weiterreichen des Pakets an den nächsten Knoten
- 6: Abfrage der Nummer des Paketes durch m-ten Knoten, c = m?
- wenn ja: -> 7
- wenn nein: -> 8
- 7: Hinzufügen von Daten aus dem m-ten Knoten zum Paket (dann 8)
- 8: Weiterreichen des Pakets an den nächsten Knoten oder die Hauptstation
- 9: Empfangen von Paket(en) in Hauptstation
- 10: Eingangszähler r um eins erhöhen
- 11: Timer läuft?
- wenn nein: -> 12
- wenn ja: -> 13
- 12: starte Timer dann zurück zu 9
- 13: lese Wert t in Timer
- 14: Wert t < T ?(wobei T = N * x ms) // Timer abgelaufen?
- wenn ja: zurück zu 9 (warten auf weitere Pakete)
- wenn nein: -> 15
- 15: Wert r erfassen // Erfassen Anzahl erhaltener Pakete
- 16: r = N? // alle Pakete eingetroffen?
- wenn nein: weiter bei 17
- wenn ja: weiter bei 19
- 17: Meldung über negativen Datenzyklus ausgeben
- 18: Optional: automatisch Eskalation auslösen // alles stoppen
- 19: Pakete auslesen, zusammenfügen und an Recheneinheit übergeben
- 20: Timer t anhalten und auf 0 zurücksetzen
- 21: Eingangszähler r auf 0 zurücksetzen
- 22: Optional: Meldung über positiven Durchgang ausgeben danach von vorn beginnen
- i: Zerlegen der Daten in n unterscheidbare Pakete
- ii: Ausgangszähler initialisieren, Ausgangszählerwert c = 0
- iii: Ausgangszähler um eins erhöhen (c + 1)
- iv: Wert c aus Zähler lesen
- v: c-tes Paket ausgeben an Schritt 2
- vi: Verzögerung von T/N
- vii: Ausgangszählerstand c hat Wert N erreicht? (c = N ?) =>
- wenn ja: Wert erreicht -> zurück zu i
- wenn nein: Wert nicht erreicht -> zurück zu iii

## Patentansprüche

1. Verfahren zum Übertragen von Daten von wenigstens einer Nebenstation (101) zu wenigstens einer Hauptstation (102) entlang einer segmentierten Strecke, wobei zwei aneinanderstoßende Segmente jeweils durch einen Knoten (103, 104, 105) verbunden sind und wobei die Strecke wenigstens drei Segmente mit wenigstens zwei Knoten (103, 104, 105) aufweist, **dadurch gekennzeichnet,**
- **dass** die Daten der Nebenstation (101) in N Datenpakete (106, 107, 108) aufgeteilt werden, wobei N der Anzahl der Knoten (103, 104, 105) entspricht,
- **dass** die Datenpakete (106, 107, 108) unterscheidbar markiert werden, wobei jede Markierung mit einem bestimmten Knoten (103, 104, 105) der Strecke korrespondiert,
- **dass** jedes Datenpaket (106, 107, 108) entlang der Strecke jeweils nur an den benachbarten Knoten (103, 104, 105) oder die benachbarte Station weitergegeben wird,
- **dass** in jedem Knoten (103, 104, 105) bei Erhalt eines Datenpakets überprüft wird, ob die Markierung des Pakets mit dem jeweiligen Knoten (103, 104, 105) korrespondiert, und dass bejahendenfalls Daten des Knotens (103, 104, 105) zum Datenpaket (106, 107, 108) hinzugefügt werden,
- **dass** die Datenpakete mit den Daten von den Knoten (103, 104, 105) in der Hauptstation (102) gesammelt werden
- und **dass** die Datenübertragung dann als erfolgreich abgeschlossen gilt, wenn alle N Datenpakete (106, 107, 108) mit Daten aller N Knoten (103, 104, 105) vorliegen.

2. Verfahren nach Anspruch 1, **dadurch gekennzeichnet, dass** beim Empfang des ersten Datenpakets (106) in der Hauptstation (102) ein Timer gestartet wird und dass nach Verstreichen einer definierten Zeitpanne überprüft wird, ob alle Datenpakete (106, 107, 108) eingetroffen sind.

3. Verfahren nach Anspruch 2, **dadurch gekennzeichnet, dass**, wenn die Überprüfung negativ abgeschlossen wird, eine Eskalation ausgelöst wird.

4. Verfahren nach Anspruch 2 oder 3, **dadurch gekennzeichnet, dass** jeder Knoten (103, 104, 105) eine Zeitspanne von x ms zum Verarbeiten der Daten benötigt und dass der Timer im Wesentlichen der Zahl der Knoten (103, 104, 105) N mal der Zeitspanne x ms entspricht.

5. Verfahren nach einem der Ansprüche 1 bis 4, **dadurch gekennzeichnet, dass** die N aufgeteilten Datenpakete (106, 107, 108) von der Nebenstation (101) um einen Zeitwert y ms zeitversetzt an den ersten Knoten (103) gegeben werden.

6. Verfahren nach Anspruch 5, **dadurch gekennzeichnet, dass** der Zeitwert y ms im Wesentlichen der Zeitspanne x ms entspricht.

7. Verfahren nach Anspruch 5, **dadurch gekennzeichnet, dass** der Zeitwert y ms größer oder gleich der Zeitspanne x ms ist.

8. Verfahren nach einem der Ansprüche 1 bis 7, **dadurch gekennzeichnet, dass** die Datenpakete (106, 107, 108) zwischen den Stützen und Stationen durch eine drahtlose Datenverbindung, insbesondere Richtfunk, übertragen werden.

## Claims

1. Method for transmitting data from at least one secondary station (101) to at least one primary station (102) along a segmented path, wherein two abutting segments are each connected by a node (103, 104, 105), and wherein the path has at least three segments with at least two nodes (103, 104, 105), **characterized in that**
- the data of the secondary station (101) are split into N data packets (106, 107, 108), N being the number of nodes (103, 104, 105),
- the data packets (106, 107, 108) are distinguishably marked, each marking corresponding to a particular node (103, 104, 105) of the path,
- each data packet (106, 107, 108) is forwarded along the path only to the respective adjacent node (103, 104, 105) or the respective adjacent station,
- in each node (103, 104, 105), upon receipt of a data packet, a check is carried out in order to ascertain whether the marking of the packet corresponds to the respective node (103, 104, 105), and, if so, data from the node (103, 104, 105) are added to the data packet (106, 107, 108),
- the data packets containing the data from the nodes (103, 104, 105) are gathered in the primary station (102),
- and the data transmission is deemed to be successfully concluded once all N data packets (106, 107, 108) containing data from all N nodes (103, 104, 105) are present.

2. Method according to claim 1, **characterized in that** upon receipt of the first data packet (106) a timer is started in the primary station (102), and **in that**, after a defined time period has elapsed, a check is carried out in order to ascertain whether all data packets (106, 107, 108) have arrived.

3. Method according to claim 2, **characterized in that** an escalation is triggered if the check yields a negative result.

4. Method according to claim 2 or 3, **characterized in that** each node (103, 104, 105) requires a time period of x ms to process the data, and **in that** the timer substantially corresponds to the number of nodes (103, 104, 105) N times the time period x ms.

5. Method according to one of claims 1 to 4, **characterized in that** the N split data packets (106, 107, 108) are passed from the secondary station (101) to the first node (103) in a manner staggered by a time value y ms.

6. Method according to claim 5, **characterized in that** the time value y ms substantially corresponds to the time period x ms.

7. Method according to claim 5, **characterized in that** the time value y ms is greater than or equal to the time period x ms.

8. Method according to one of claims 1 to 7, **characterized in that** the data packets (106, 107, 108) are transmitted between the supports and stations by a wireless data connection, in particular directional radio.

## Revendications

1. Procédé pour la transmission de données d'au moins une station secondaire (101) à au moins une station principale (102) le long d'un trajet segmenté, dans lequel deux segments placés bout à bout sont reliés par un noeud (103, 104, 105) et dans lequel le trajet comprend au moins trois segments avec au moins deux noeuds (103, 104, 105), **caractérisé en ce que**
- les données de la station secondaire (101) sont divisées en N paquets de données (106, 107, 108), où N correspond au nombre de noeuds (103, 104, 105),
- **en ce que** les paquets de données (106, 107, 108) sont marqués de façon à pouvoir les différencier, chaque marquage correspondant à un certain noeud (103, 104, 105) du trajet,
- **en ce que** chaque paquet de données (106, 107, 108) le long du trajet est transmis seulement au noeud voisin (103, 104, 105) ou à la station voisine,
- **en ce que** lors de la réception d'un paquet de données, il est vérifié dans chaque noeud (103, 104, 105) que le marquage du paquet correspond au noeud (103, 104, 105) en question et **en ce que**, dans l'affirmative, des données du noeud (103, 104, 105) sont ajoutées au paquet de données (106, 107, 108),
- **en ce que** les paquets de données avec les données des noeuds (103, 104, 105) sont collectés dans la station principale (102)
- et **en ce que** la transmission des données est considérée comme terminée et réussie si les N paquets de données (106, 107, 108) sont tous présents avec les données des N noeuds (103, 104, 105).

2. Procédé selon la revendication 1, **caractérisé en ce que**, lors de la réception du premier paquet de données (106), un chronomètre est démarré dans la station principale (102) et **en ce que**, lorsqu'un laps de temps défini est écoulé, il est vérifié si tous les paquets de données (106, 107, 108) ont été reçus.

3. Procédé selon la revendication 2, **caractérisé en ce que**, lors que la vérification est terminée avec un résultat négatif, une procédure d'escalade est déclenchée.

4. Procédé selon la revendication 2 ou 3, **caractérisé en ce que** chaque noeud (103, 104, 105) a besoin d'un laps de temps de x ms pour traiter les données et **en ce que** le chronomètre correspond sensiblement au nombre des noeuds (103, 104, 105) N fois le laps de temps de x ms.

5. Procédé selon l'une des revendications 1 à 4, **caractérisé en ce que** les N paquets de données (106, 107, 108) de la station secondaire (101) répartis sont émis vers le premier noeud (103) avec un décalage dans le temps d'une valeur de temps de y ms.

6. Procédé selon la revendication 5, **caractérisé en ce que** la valeur de temps de y ms correspond sensiblement au laps de temps de x ms.

7. Procédé selon la revendication 5, **caractérisé en ce que** la valeur de temps de y ms est supérieure ou égale au laps de temps de x ms.

8. Procédé selon l'une des revendications 1 à 7, **caractérisé en ce que** les paquets de données (106, 107, 108) sont transmis entre les pylônes et les stations par une communication de données sans fil, en particulier par radiodiffusion à faisceau dirigé.
